Europäisches Patentamt

European Patent Office

Office européen des brevets

(11) Veröffentlichungsnummer : **0 026 282**
**B1**

(12) **EUROPÄISCHE PATENTSCHRIFT**

(45) Veröffentlichungstag der Patentschrift :
13.07.83

(21) Anmeldenummer : 80104275.5

(22) Anmeldetag : 19.07.80

(51) Int. Cl.³ : **H 01 J   9/48// C03B35/04,
B65G49/06**

(54) **Auflage für Schirmwannen von Farbbildröhren.**

(30) Priorität : 27.09.79 DE 2939143

(43) Veröffentlichungstag der Anmeldung :
08.04.81 Patentblatt 81/14

(45) Bekanntmachung des Hinweises auf die Patenterteilung : 13.07.83 Patentblatt 83/28

(84) Benannte Vertragsstaaten :
BE FR GB IT NL

(56) Entgegenhaltungen :
US A 2 162 377
US A 3 412 992

(73) Patentinhaber : **International Standard Electric Corporation
320 Park Avenue
New York New York 10022 (US)**

(72) Erfinder : **Schlayer, Wolfgang
Rippoldsauerstrasse 11
D-7000 Stuttgart 50 (DE)**
Erfinder : **Hemminger, Herbert
Bruderweg 6
D-7060 Schorndorf (DE)**

(74) Vertreter : **Graf, Georg H., Dipl.-Ing. et al
c/o Standard Elektrik Lorenz AG Patent- und
Lizenzwesen Postfach 300 929 Kurze Strasse 8
D-7000 Stuttgart 30 (DE)**

## Auflage für Schirmwannen von Farbbildröhren

Die Erfindung betrifft eine Vorrichtung zum Absetzen von Schirmwannen während der Fertigung von Farbbildröhren.

Wesentliche Bauteile einer Farbbildröhre sind die Schirmwanne aus Glas, im folgenden Wanne genannt, und die Schattenmaske, im folgenden Maske genannt. Die Maske ist mit der Wanne lösbar verbunden. Dieses kombinierte Bauteil nennt man vor dem Zusammenfügen mit einem Bildröhrenkolben eine Wannen-Masken-Kombination, im folgenden als Kombination bezeichnet.

Nach dem Einfügen der Maske in die Wanne wird die Wanne erhitzt, z. B. auf ca. 500 °C, um mechanische Spannungen, die beim Einfügen entstanden, zu lösen. Diesen Prozess nennt man Stabilisieren.

Im weiteren Verlauf der Farbbildröhrenfertigung wird ein Leuchtschirm auf die Wanne aufgebracht. Die in diesem Leuchtschirm enthaltenen flüchtigen Substanzen werden durch Ausheizen, bei z. B. ca. 480 °C, entfernt.

Beim Transport von einer Fertigungsmaschine zur anderen, bzw. in den Maschinen selbst müssen die Wannen bzw. die Kombinationen auf die Auflage eines Transportmittels abgesetzt werden. Die Auflage sollte dabei auch bei den Temperaturen des Stabilisierens und des Ausheizens ihre mechanischen und chemischen Eigenschaften nicht wesentlich verändern.

Die Auflagen werden bisher üblicherweise aus Asbest hergestellt. Die Asbestauflage gibt beim Absetzen der Wanne nach, so daß das Glas der Wanne nicht beschädigt wird. Allerdings lösen sich beim Absetzen leicht Asbestfasern ab, die durch die starken Luftströmungen an den Eingängen der Stabilisierund Ausheizöfen aufgewirbelt werden und so in die Kombination gelangen. Diese Fasern setzen sich häufig in den Durchbrüchen der Maske ab was sich an der fertigen Röhre deutlich in Form dunkler, von Elektronenstrahlen nicht getroffener Leuchtschirmbereiche äußert.

Um dem Ablösen von Fasern vorzubeugen wird das Asbest in Form von Asbestzement verwendet. Dieser ist in Qualitäten unterschiedlicher Sprödigkeit und Härte erhältlich. Es hat sich gezeigt, daß auch bei Asbestzementen, die noch nicht zu hart sind, um als Auflage verwendet werden zu können, sich Fasern ablösen.

Aus der US-A-3 412 992 ist eine Auflage zum Absetzen von Schirmwannen während der Fertigung von Farbbildröhren mit Stützen bekannt, an deren oberen Enden Polster aus Edelstahlwolle angebracht sind.

Der Erfindung liegt die Aufgabe zugrunde, eine nachgiebige temperaturbeständige Auflage für Wannen von Farbbildröhren anzugeben, die gleichzeitig eine hohe Abriebfestigkeit aufweist.

Die Lösung dieser Aufgabe ist durch das Kennzeichen des Hauptanspruchs gegeben. Metallgestricke als Auflagen erwiesen sich überraschenderweise so nachgiebig, daß bei bisherigen Versuchen nie Beschädigungen des Glases der Wanne festgestellt werden konnten. Die Metallgestrick-Auflagen sind hitzebeständig und abriebfest. Vorteilhafte Weiterbildungen und Ausführungsformen geben die Unteransprüche. Die Ausführung mit einem federnden Metallbügel vermeidet auch bei sehr hartem Aufsetzen der Wanne Beschädigungen. Die Erfindung wird im folgenden anhand von Ausführungsbeispielen und anhand zweier Figuren näher erläutert. Es zeigen :

Figur 1 Aufsicht auf ein Gestell zum Absetzen von Wannen für Farbbildröhren ;

Figur 2 Ansicht in Richtung A der Figur 1.

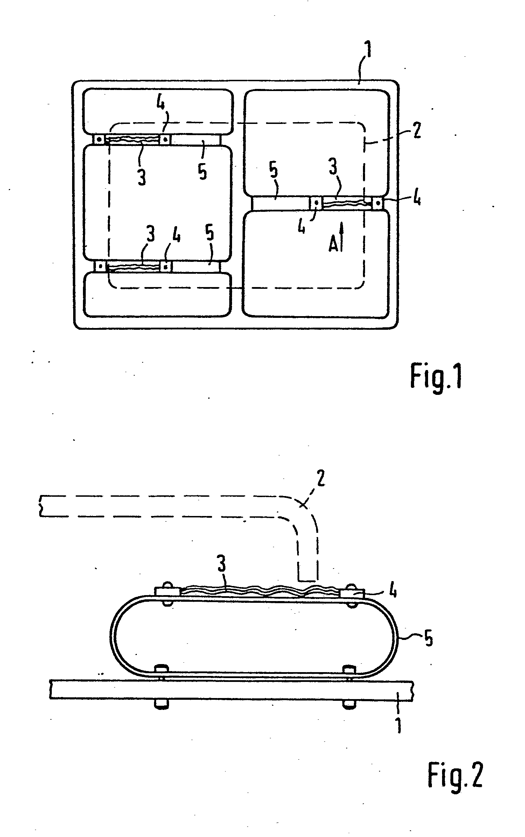

In Figur 1 ist ein Gestell 1 in Aufsicht dargestellt, auf das Wannen 2 (gestrichelt) für Farbbildröhren aufgesetzt werden können. Dieses Gestell wird für horizontales Absetzen einer Wanne benutzt ; es können jedoch auch Gestelle für schräges Absetzen verwendet werden, was jedoch ohne Belang für die verwendeten Auflagen ist. Eine Metallgestrickauflage 3 wird durch Halterungen 4 über einen federnden Metallbügel 5 mit dem Gestell 1 verbunden. Figur 2 zeigt den Metallbügel 5 mit Auflage 3 in Blickrichtung A der Figur 1.

Die Auflage besteht vorzugsweise aus einem Gestrick eines nichtrostenden Stahls, z. B. × 12 Cr Ni 188 mit einer Drahtstärke von 0,24 mm. Besonders vorteilhaft ist es, wenn das Gestrick stark gewellt ist. Mehrere Lagen, z. B. vier Lagen eines handelsüblichen Gestrickes werden mit einer Länge von z. B. 200 mm aufeinandergelegt, in ein kurzes Rohrstück eingefügt und durch Quetschen in diesem gehalten.

Das Gestrick 3 wird mit den Rohrstückhalterungen 4 entweder direkt oder über den Bügel 5 auf dem Gestell 1 befestigt. Der Bügel ist aus zwei Millimeter starkem Stahlblech, z. B. × 12 Cr Ni 177 hergestellt. Der Bügel dämpft auch Stöße bei sehr hartem Aufsetzen der Wanne.

Die bisher beschriebenen Auflagen sind bis mindestens zu den Temperaturen des Stabilisierens und des Ausheizens mechanisch beständig und rostfrei. Für Auflagen, die nur bei Raumtemperatur benutzt werden, können natürlich Gestricke aus nicht hitzefesten Metallen verwendet werden.

**Ansprüche**

1. Vorrichtung zum Absetzen von Schirmwannen (2) während der Fertigung von Farbbildröhren, dadurch gekennzeichnet, daß sie als Auflage (3) ein Metallgestrick aufweist.

2. Vorrichtung nach Anspruch 1, dadurch gekennzeichnet, daß das Metallgestrick auf einem federnden Metallbügel (5) befestigt ist.

3. Vorrichtung nach Anspruch 1 oder 2, dadurch gekennzeichnet, daß das Metallgestrick bis mindestens 500 °C hitzefest ist.

4. Vorrichtung nach Anspruch 1, 2 oder 3, dadurch gekennzeichnet, daß das Metallgestrick aus nichtrostendem Material hergestellt ist.

## Claims

1. Device for the depositing of screen troughs (2) during the production of colour picture tubes, characterised in this, that it has a knitted metal fabric as the support (3).

2. Device according to Claim 1, characterised in this, that the knitted metal fabric is fixed on a spring metal bracket (5).

3. Device according to Claim 1 or 2, characterised in this, that the knitted metal fabric is heat-resistant up to at least 500 °C.

4. Device according to Claim 1, 2 or 3, characterised in this, that the knitted metal fabric is made of rust-proof material.

## Revendications

1. Monture pour porter des panneaux d'écran (2) au cours de la fabrication de tubes image de télévision en couleurs caractérisée par le fait qu'elle comprend en tant que support (3) un tissu de fils métalliques.

2. Monture telle que définie par la revendication 1, caractérisée par le fait que le tissu de fils métalliques est monté sur une boucle en métal élastique.

3. Monture telle que définie par l'une des revendications 1 et 2, caractérisée par le fait que le tissu de fils métalliques résiste à des températures atteignant 500 °C.

4. Monture telle que définie par l'une des revendications 1, 2 et 3, caractérisée par le fait que le tissu de fils métalliques est en acier inoxydable.

Fig.1

Fig.2